# EUROPEAN PATENT APPLICATION

(11) **EP 3 285 415 A1**
(43) Date of publication of application: **21.02.2018**
(21) Application number: 16185028.4
(22) Date of filing: 19.08.2016
(51) Int. Cl.: H04J 11/00, H04L 5/00

(54) **METHOD AND APPARATUS FOR TRANSMITTING A MULTICARRIER SIGNAL**

(71) Applicant: NTT DOCOMO, INC., Chiyoda-ku Tokyo (JP)
(72) Inventor: KUSUME, Katsutoshi, 80687 München (DE); IWAMURA, Mikio, 80687 München (DE); BAZZI, Jamal, 80687 München (DE); WEITERKEMPER, Petra, 80687 München (DE); TAKEDA, Kazuki, Chiyoda-ku, 100-6150 Tokyo (JP); NAGATA, Satoshi, Chiyoda-ku, 100-6150 Tokyo (DE)
(74) Representative: Betten & Resch

(57) **Abstract**

A method for transmitting a multicarrier signal over frequency resource,
wherein said frequency resource is divided into a plurality of resource blocks,
said resource block comprises of a number of subcarriers that are equally spaced by a subcarrier spacing,
said number of subcarriers or said subcarrier spacing is configurable per said resource block or per a contiguous set of resource blocks,
said subcarrier spacing *dₙ* is 2*ⁿ* times the smallest configurable subcarrier spacing with non-negative integer n, and
subcarrier center frequencies of subcarrier spacing *dₙ* and subcarrier center frequencies of subcarrier spacing *dₙ₊₁* are shifted by integer multiples of *dₙ*.

## Description

### Field of the invention

The present invention is directed to a method and apparatus for transmitting a multicarrier signal.

### Background of the invention

Orthogonal Frequency Division Multiplexing, OFDM, shows desirable properties in a multiuser scenario as long as all parameters like subcarrier, hereinafter also referred to as SC, spacing and symbol duration are constant in the system. In a future system it is expected that the numerology may be optimized for each frequency resource for serving certain service type. That is because only one fixed numerology may not be efficient to support diverse kinds of applications with different requirements. The term numerology in the following refers especially to the spacing between the subcarriers, but also it can refer to the symbol duration. For example, a wider SC spacing may be more suitable for combating higher Doppler shift in high mobility scenario than in low mobility scenario.

In such cases where different numerologies are supported within one system band, OFDM is no longer orthogonal and the high out-of-band emission, OOBE, introduces significant interference to the neighboring resources in the frequency domain. A so-called guard band between the users can reduce the interference, but due to the spectrum of OFDM a large amount of guard band would be needed leading to dramatically reduced spectral efficiency.

Therefore, some OFDM-based waveforms are considered as promising candidate waveforms for new radio that apply additional signal processing such as filtering or windowing in order to lower the OOBE and thus lower the interference to neighboring resources.
Figure 1 shows a schematic overview of OFDM-based waveform in a transmitter where resource allocation for different users is performed in the frequency domain.
Figure 2 illustrates an example of applying different numerologies in neighbor frequency resources allocated to different users or services.

Supporting different numerologies, i.e. different SC spacing allocation for frequency resources allocated to different users, within one system band also plays a key role in new radio design as it aims at forward compatibility, which enables to seamlessly introduce new waveforms and/or new numerologies in order to effectively support emerging applications with new requirements in the future.

With different numerologies applied within one system band, OFDM-based waveforms are not orthogonal, even when the system is synchronous, although filtering or windowing helps reduce the interference to neighbor subband as compared to OFDM.

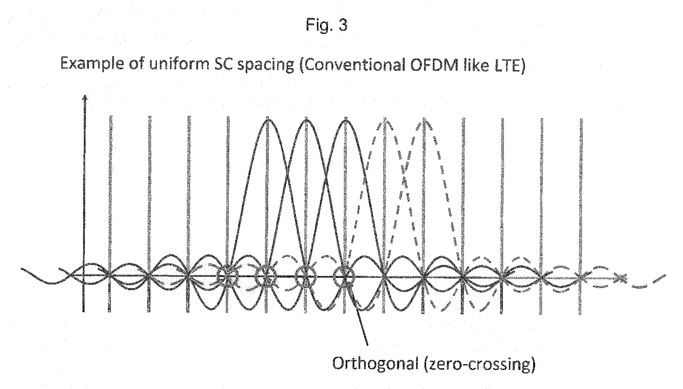

Figure 3 shows an example of orthogonal SCs in a conventional system like LTE where the SC spacing is fixed and uniform over the system band.

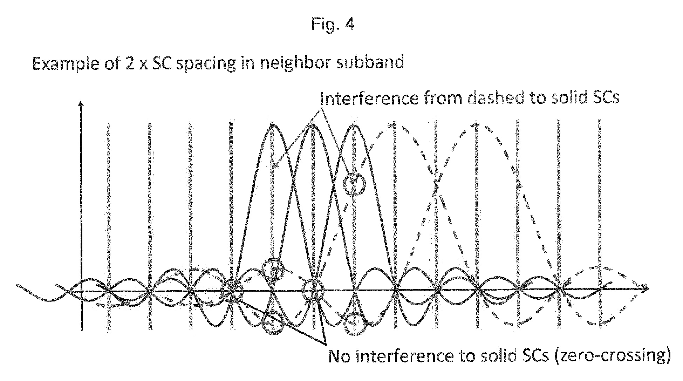

Figure 4 shows an example of non-orthogonal SCs for a system where the SC spacing in one subband allocated to a first user is twice as large as that in another subband allocated to a second user. In this case every second SC (shown by solid lines) with smaller SC spacing in the first subband is interfered by each of the SCs (shown as dashed lines) with larger SC spacing of the second subband.

The interference resulting from the use of mixed numerology can degrade the reception of data, control signaling, or reference signal, RS. In particular, degradation of RS reception may be more serious than data or control signaling, which is usually applied some forward error correction coding, whereas RS is not. The poor channel estimation reliability due to interfered RS, in turn, significantly degrades the error performance of detecting data or control signals.

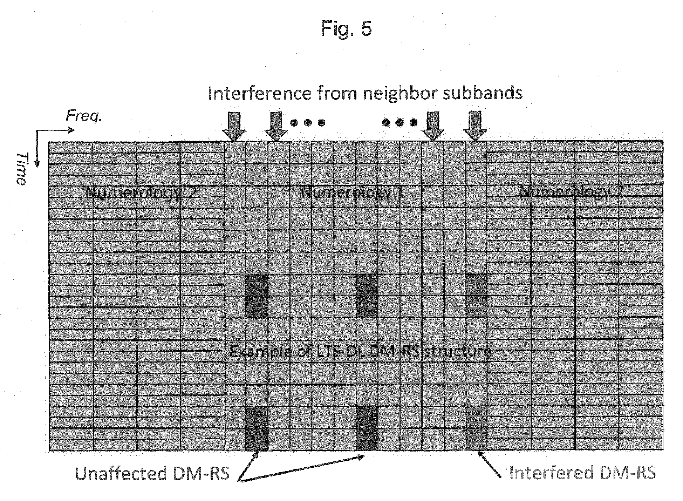

Figure 5 shows an example of LTE downlink, DL, demodulation RS, DM-RS where the SC spacing in the left and right resources are twice as large as that in the middle one. As observed in Figure 4, every second SC in the middle resource is interfered and thus, in this example the DM-RS symbols on the right edge suffer from severe interference.

It is noted that, in Figures 4 and 5, there is simply assumed a particular way of locating the SCs, for the sake of ease of explanation, and then there is observed the specific interference pattern. It should be understood that the interference pattern becomes different when the SCs are placed in a different manner. Therefore, an important observation here is that how to locate the SCs or the center frequencies of the SCs in neighbor resources is essential in terms of interference, for mixed numerologies or cases where the SC spacing is different in neighboring subbands.

It should be noted further that the Figures shown here typically show only one physical resource block or one subband, while SCs with different spacings are shown in this single resource block. In reality SCs with different spacings will be assigned to different PRBs, a first set of SCs with a first SC spacing assigned to a first PRB and a second set of SCs having a second SC spacing being assigned to a second PRB. Showing different SC spacings within one PRB or one subband is for illustrative purposes only to illustrate how these different SCs with different spacings interfere with each other. The skilled person will readily understand that the SCs with different spacings are to be allocated to different PRBs or groups of PRBs such as subbands and how this affects then the interference between the SCs with different SC spacings.

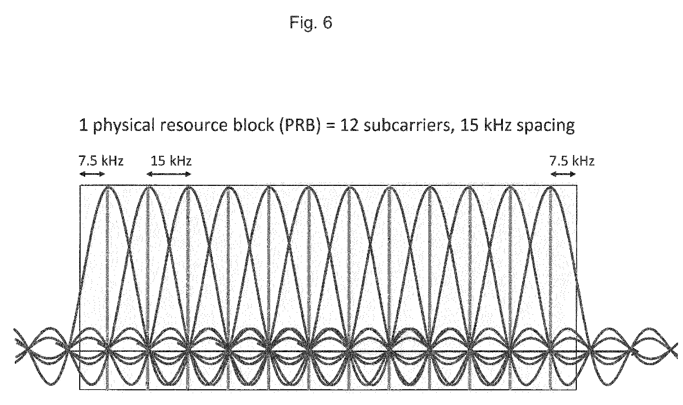

Figure 6 shows the physical resource block, PRB, which comprises 12 SCs with 15 kHz SC spacing in the conventional LTE system.

There are a number of possible approaches in the prior art about how to locate the center frequencies for other SC spacing, as discussed in the following.

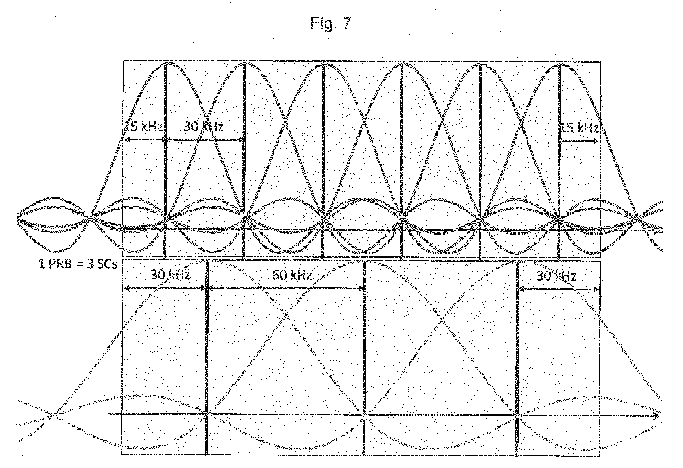

Figure 7 illustrates a prior art approach of symmetrically locating the equally spaced SCs for 30 and 60 kHz SC spacing in the PRB, similar to 15 kHz spacing in Figure 6. For the both 30 kHz (upper figure) and 60 kHz spacing (lower figure) the center frequencies (shown as solid vertical lines) are not aligned with the 15 kHz grid (shown as dotted vertical lines).

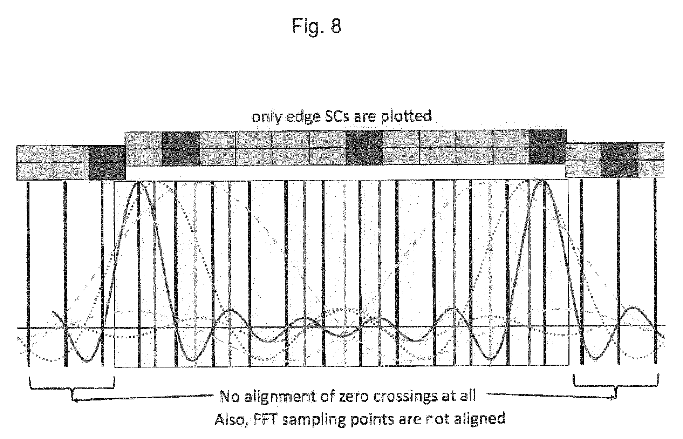

Figure 8 further shows the SCs with the three different SC spacing of 15, 30, and 60 kHz that are located according to Figure 7 but only those SCs at the PRB edges are shown. Two observations can be made.

First, there is no alignment of zero crossings outside the center PRB in Figure 8. This means that, depending on the SC spacing allocation in the center PRB (i.e. one of 15, 30, and 60 kHz spacing is allocated), the interference pattern in neighbor PRBs can be different and there is no common location where there is no interference (orthogonal). This makes the RS design highly complex if interference free location should be chosen for RSs to protect them as the optimal locations depend on the SC spacing in the scheduled neighbor PRBs.

Second, the fast Fourier transform, FFT, sampling points are not aligned over different SC spacing in Figure 8. The center SC frequencies for 15, 30, and 60 kHz SC spacing, shown in vertical lines, are not aligned. This makes the transmitter and receiver processing complex since multiple FFTs are to be required.

To keep the transmitter and receiver processing simple, i.e. only single FFT is needed, it is beneficial to share a common resource grid among different SC spacing.

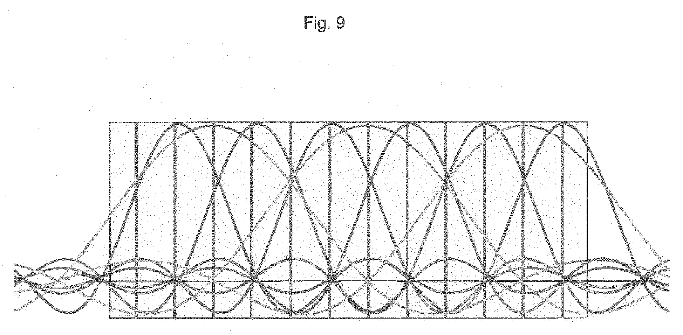

Figure 9 illustrates an example of sharing a common resource grid, as a particular example, LTE 15 kHz grid is reused for the both SC spacing of 30 kHz and 60 kHz. The center frequencies of 30 kHz and 60 kHz spacing are not aligned each other.

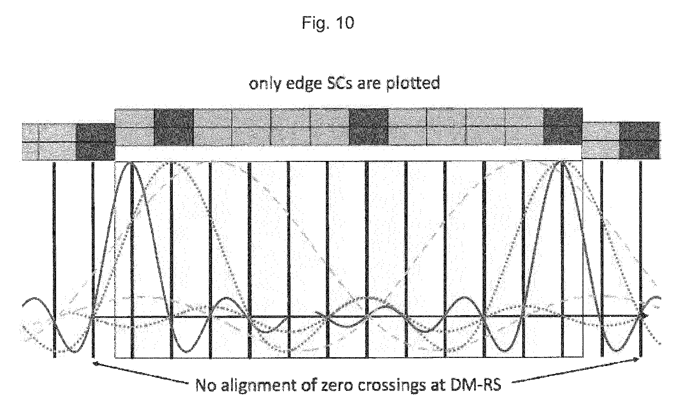

Figure 10 shows the SCs with the three different SC spacing of 15, 30, and 60 kHz according to Figure 9 but only those at the PRB edges. Similarly to Figure 8 there is no alignment of zero crossings among different SC spacing outside the center PRB and thus the RS design can become highly complex.

The present invention intends to overcome those drawbacks of the prior art.

### Summary of the invention

According to one embodiment there is provided a method for transmitting a multicarrier signal over frequency resource, wherein
a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks,
d) said subcarrier spacing *dₙ* is 2*ⁿ* times the smallest configurable subcarrier spacing do with non-negative integer n, and
e) subcarrier center frequencies of subcarrier spacing *dₙ* and subcarrier center frequencies of subcarrier spacing *d*_{*n*+1} are shifted by integer multiples of *dₙ.*

In this manner there is defined a "recursive rule" for the frequency spacing *dₙ* based on the minimum frequency spacing do and defining the location of the center frequency for a spacing *dₙ* by referring to the smaller spacing *dₙ₋₁.* By making sure that for a certain *dₙ* the spacing with respect to the center frequencies for a subcarrier spacing *dₙ₋₁* is an integer multiple of *dₙ₋₁* it can be ensured that at the zero crossings of all subcarriers for all assigned frequency spacings there will be no interference from neighboring resource blocks having a different frequency spacing.

According to one embodiment said steps a) to e) define all possible subcarrier spacings and the corresponding locations of center frequencies, which can be configured for a certain resource block or a set of contiguous resource blocks, and wherein during an actual act of transmission one of the thus defined possible subcarrier spacings and one of the corresponding center frequency locations is configured or chosen to be used for transmission in said certain resource block or set of contiguous resource blocks.

In this manner the steps or conditions a) to e) define the possibilities for possible selections of subcarrier spacings and corresponding center frequencies in a certain resource block or set of contiguous resource blocks. The conditions a) to e) thereby define a plurality of possible configuration options, while all of them ensure that at the zero crossings of all subcarriers for all possible assigned frequency spacings and center frequency locations there will be no interference from neighboring resource blocks, even if they have a different frequency spacing. In practice, during an actual act of transmission, however, only one frequency spacing and one center frequency location will be chosen for a certain resource block or set of contiguous resource blocks. Before the act of transmission therefore one of these possible configurations will be chosen among all the possible configuration options.

According to one embodiment different SC spacings and center frequency locations may be chosen for neighboring resource blocks or neighboring sets of contiguous resource blocks.

This enables the allocation of different SC spacings to neighboring resource blocks or sets of contiguous resource blocks. As long as the same rules apply for both neighboring resource blocks there will be coinciding zero crossings, which then may be used for locating thereon reference signals.

According to one embodiment said contiguous set of resource blocks, per which said number of subcarriers or said subcarrier spacing is configurable, is a subband of said frequency resource, said subband being assigned to a certain user or a certain service, and wherein different subbands may have assigned different subcarrier frequency spacings.

In this manner different subcarrier spacings may be assigned to different subbands, which in turn are assigned to different users so that the subcarrier spacing can be tailored to the needs and the circumstances of a specific user.

According to one embodiment said resource block or contiguous set of resource blocks has a width being a positive non-zero integer multiple of the subcarrier spacing configured for said resource block or contiguous set of resource blocks.

In this manner it can be made sure that the SCs are symmetrically allocated on both edges of the resource block or contiguous set of resource blocks with respect to their distance from the edge of the resource block or contiguous set of resource blocks in which they are allocated. It should be noted here that according to one embodiment the width of a resource block or contiguous set of resource blocks for which certain SC spacing may be configured may depend on the SC spacing such that for different SC spacing different widths of resource blocks or contiguous set of resource blocks may be chosen.

According to one embodiment reference symbols are located at one or more of center frequencies of the configurable subcarrier spacing larger than the smallest subcarrier spacing.

This enables a somewhat higher density of reference symbols while still decreasing interference compared with a completely free choice of the location of the reference symbols.

According to one embodiment reference symbols are located at one or more of center frequencies of the largest configured subcarrier spacing.

This ensures that the reference symbols will not be disturbed by out of band interference from neighboring resource blocks with different frequency spacings.

According to one embodiment said reference symbols are located inside subset of contiguously allocated physical resource blocks.

This makes it possible to choose only a part of suitable resource blocks for the reference symbol allocation.

According to one embodiment said subset of contiguously allocated physical resource blocks are located at one or both edges of said contiguously allocated physical resource blocks.

The edges are particularly suitable for the location of the reference symbols.

According to one embodiment there is provided an apparatus for transmitting a multicarrier signal over frequency resource, wherein
a) said frequency resource is divided into a plurality of resource blocks,
b) said resource block comprises of a number of subcarriers that are equally spaced by a subcarrier spacing,
c) said apparatus comprises a module for configuring a number of subcarriers or said subcarrier spacing per said resource block or per a contiguous set of resource blocks, said configuring being performed such that
d) said subcarrier spacing *dₙ* is 2*ⁿ* times the smallest configurable subcarrier spacing do with non-negative integer *n*, and
e) subcarrier center frequencies of subcarrier spacing *dₙ* and subcarrier center frequencies of subcarrier spacing *d*_{*n*+1} are shifted by integer multiples of *dₙ.*

This enables an implementation of an apparatus for transmitting a signal having the advantages of an embodiment of the invention.

According to one embodiment the apparatus further comprises a module for performing the steps as defined in one of the embodiments of the invention.

According to one embodiment there is provided a multicarrier signal to be transmitted over a frequency resource, wherein
a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks ,
d) said subcarrier spacing *dₙ* is 2*ⁿ* times the smallest configurable subcarrier spacing *do* with non-negative integer *n*, and
e) subcarrier center frequencies of subcarrier spacing *dₙ* and subcarrier center frequencies of subcarrier spacing *d*_{*n*+1} are shifted by integer multiples of *dₙ.*

Such a signal achieves the advantages with respect to reduced out of band interference in case of different frequency spacings being used.

### Description of the drawings

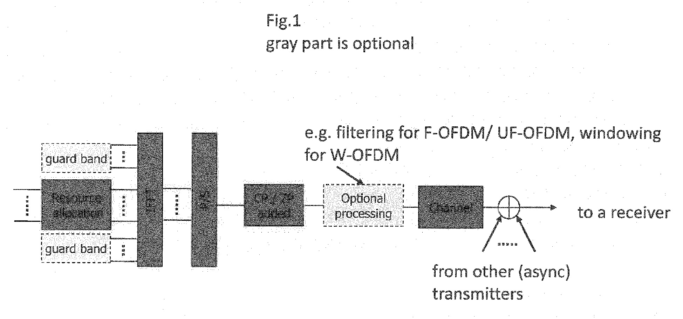

Figure 1 shows a schematic overview of OFDM-based waveform in a transmitter.

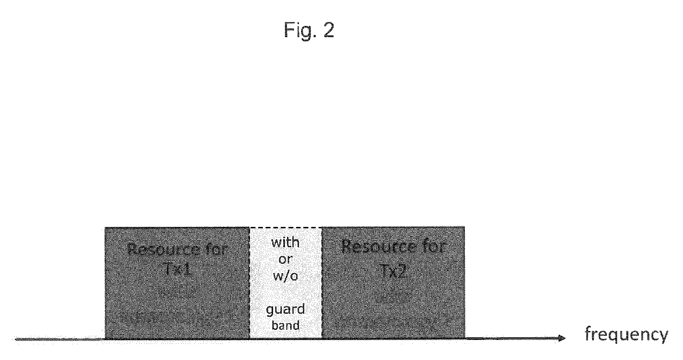

Figure 2 illustrates an example of applying different numerologies in neighbor frequency resources.
Figure 3 shows an example of orthogonal SCs in a conventional system like LTE where the SC spacing is fixed and uniform over the system band.
Figure 4 shows an example of non-orthogonal SCs for a system where the SC spacing in one subband is twice as large as that in another subband.
Figure 5 shows an example of LTE DL DM-RS where the SC spacing in the left and right resources are twice as large as that in the middle one.
Figure 6 shows PRB comprising of 12 SCs with 15 kHz SC spacing in the conventional LTE system.
Figure 7 shows an approach of symmetrically locating the equally spaced SCs for 30 and 60 kHz SC spacing in the PRB.
Figure 8 shows the SCs with the three different SC spacing of 15, 30, and 60 kHz that are located according to Figure 7.
Figure 9 shows an example of sharing LTE 15 kHz grid for the SC spacing of 30 kHz and 60 kHz. The center frequencies of 30 kHz and 60 kHz spacing are not aligned.
Figure 10 shows the SCs with the three different SC spacing of 15, 30, and 60 kHz according to Figure 9.

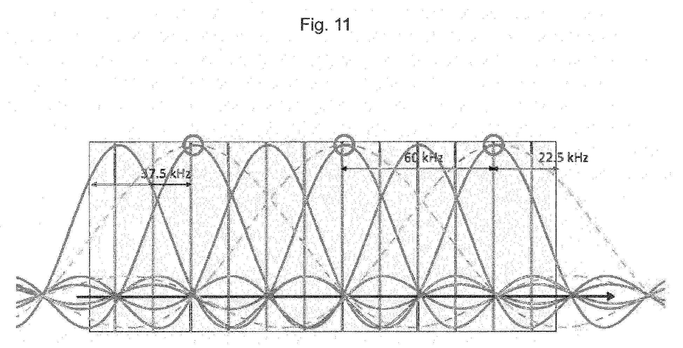

Figure 11 shows an example of reusing the LTE 15 kHz grid for the SCs for 30 and 60 kHz spacing where the SC center frequencies for 30 and 60 kHz spacing are further aligned

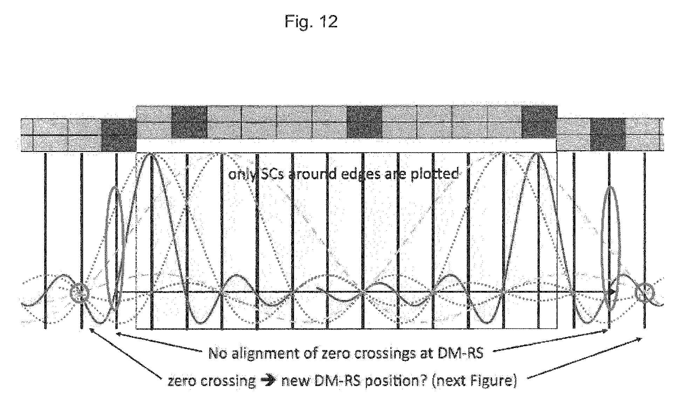

Figure 12 shows the SCs with the three different SC spacing of 15, 30, and 60 kHz according to Figure 11 but only those at the PRB edges.

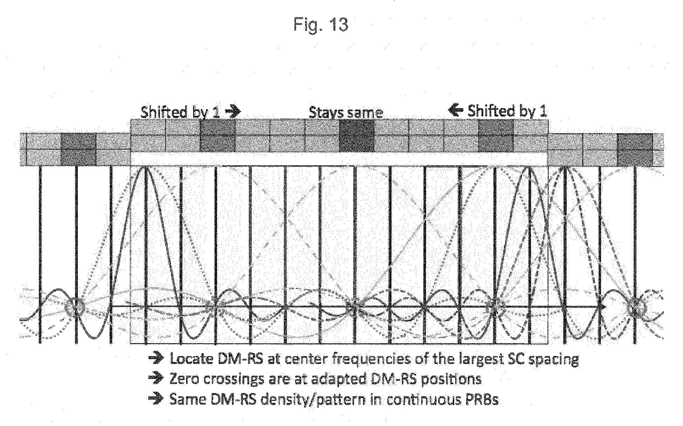

Figure 13 shows an example of the slightly modified DM-RS positions that are adapted from the original LTE design to align them to the zero crossings or to the SC center frequencies of the 60 kHz SC spacing.

### Detailed description

At first, some terms used in the description will be defined in the following list of abbreviations.
- CRS: cell-specific reference signal
- CSI-RS: channel state information reference signal
- DM-RS: demodulation reference signal
- DL: downlink
- FFT: fast Fourier transform
- GCD: greatest common divisor
- LCM: least common multiple
- OFDM: orthogonal frequency division multiplexing
- OOBE: out of band emission
- PRB: physical resource block
- RE: resource element
- RS: reference signal
- SC: subcarrier
- SR: sounding reference signal
- UL: uplink

As has been explained before, in the prior art approaches there are several drawbacks in terms of RS design complexity and receiver processing complexity. According to one embodiment, it is proposed to align SC center frequencies of SC spacing larger than the smallest SC spacing, in addition to reusing the smallest SC spacing grid to the larger SC spacing.

Figure 11 shows an example of reusing the LTE 15 kHz grid for the SCs for 30 and 60 kHz spacing where the SC center frequencies for 30 and 60 kHz spacing are further aligned as illustrated by the circles in Fig. 11. The center frequencies of the SCs separated by 60 kHz (shown by dashed lines) coincide with (every second) center frequency of the SCs spaced by 30 kHz. This illustrates that for a second spacing (60 kHz), which is twice a first spacing (30 kHz), the center frequencies can be made to coincide, if the center frequencies of the second spacing (60 kHz) are shifted by the center frequencies of the first spacing (30 kHz) by an amount corresponding to the first spacing (30 kHz).

Figure 12 shows the SCs with the three different SC spacing of 15 (solid lines), 30 (dotted lines), and 60 (dashed lines) kHz according to Figure 11 but only those at the PRB edges are shown. In contrast to Figure 10, Figure 12 shows some alignment of zero crossing outside the center PRB. This is because the crossings are periodic and in fact at the SC center frequencies of the 60 kHz spacing. This can be beneficial since the interference free locations of zero crossings can be exploited to protect some signals such as RS from interference.

According to one embodiment, this is achieved by introducing two rules that ensures the periodic aligned zero crossings for the use of mixed numerologies.

The first rule is to restrict the SC spacing, *dₙ*, to be 2*ⁿ* times the smallest configurable SC spacing with non-negative integer n, i.e. *dₙ* = 2*ⁿd*₀ This means that do is the smallest SC and *d*₁ = 2*d*₀, *d*₂ = 2*d*₁, ..., *d*ₙ = 2*d*ₙ₋₁, and so on. This results in that the least common multiple, LCM, of all the SC spacings is the largest SC spacing, and the greatest common divisor, GCD, of all the SC spacing is the smallest SC spacing. This ensures that all the SC center frequencies can be placed, if properly placed, on the smallest SC grid.

The second rule is to restrict the SC center frequencies of SC spacing *d*_{*n*+1} to be on the SC center frequencies of SC spacing *dₙ*. Since *d*ₙ₊₁ = 2*dₙ*, the SC center frequencies of *d*_{*n*+1} are on every second center frequencies of SC spacing *dₙ.* This is achieved by shifting the SC center frequencies of SC spacing *d*_{*n*+1} from the SC center frequencies of SC spacing *dₙ* by integer multiples of *dₙ.* In other words, a distance between any of the SC center frequencies of SC spacing *d*_{*n*+*1*} and any of the SC center frequencies of SC spacing *dₙ* should be an integer multiple of *dₙ*. This ensures the alignments of zero crossings for SCs with SC spacing of *dₙ* and *d*_{*n*+}*₁.* In a recursive manner, this ensures the alignments of zero crossings for SCs with all the SC spacing at the SCs with the largest SC spacing.

In practice, for the spacings 15 kHz *(do,),* 30 kHz (*d₁*=*d₀₊₁*= *dₙ*) and 60 kHz (*d₂*=*d*_{*1*+*1*}= *d*_{*n*+*1*}) this means that for the 15 kHz spacing the center frequencies are chosen to be located on the grid elements of the 15 kHz grid. For the center frequencies of the SCs with 30 kHz spacing (*d₁*) the center frequencies also lie on elements of the 15 kHz grid, but the center frequencies are to be chosen such that they are shifted from the center frequencies of the 15 kHz spacing by 15 kHz or an non-negative integer multiple thereof, while the non-negative integer can be 0, 1, 2, 3,....n. For the spacing of 60 kHz also again the SC center frequencies lie on the 15 kHz grid, but with respect to the 30 kHz center frequencies they are shifted by 30 kHz or by 30 kHz multiplied with a non-negative integer.

In this manner there is a plurality of options defined how the SC spacings and the locations of the corresponding center frequencies may be configured or chosen. According to one embodiment typically there is only one SC spacing and corresponding center frequency locations chosen for a certain resource block or a contiguous set of resource blocks, while it follows, however the aforementioned rules. A different SC spacing may be chosen for the neighboring resource block or set of resource blocks (such as a subband). According to embodiments the same rules or conditions defining options how to configure the SC spacings and center frequency locations apply to the neighboring subband or resource block or contiguous set of resource blocks. If this is the case, then among the thus defined possible configuration options one option may be arbitrarily chosen, and still it can be ensured that there will be zero crossings which coincide between the SCs of the first resource block and the SCs of the second neighboring resource block or neighboring set of contiguous resource blocks.
In Fig. 12 one can see that there is illustrated a SC spacing of 15 kHz (the SC is shown as solid line), a SC spacing of 30 kHz (the SCs are shown as dotted lines), and a SC spacing of 60 kHz (the SCs are shown as dashed lines). Only some of the SCs are illustrated, namely the ones close to the edge of the resource block.

Let the 15 kHz SC spacing be called do, the 30 kHz SC spacing be called *d₁* and the 60 kHz SC spacing be called *d₂*. One then can see that all center frequencies lie on elements of the 15 kHz grid. Furthermore, the center frequencies of the leftmost SC among the SCs having a spacing of 30 kHz is 0 kHz shifted from the center frequency of the leftmost SC among the SCs having a spacing of 15 kHz. This is a non-zero integer multiple of 15 kHz, i.e. the 15 kHz spacing do.

For the leftmost center frequency among the SCs having a spacing of 60 kHz *d₂* the center frequency according to the rules of the embodiment should be shifted form the center frequency of a SC among the 30 kHz spaced SCs by an non-integer multiple of *d₂₋₁*, i.e. by zero or a multiple of 30 kHz. This is the case, as can be seen at the left-hand side of Fig. 12.

According to one embodiment, it is further proposed to adapt the RS locations to the zero crossings in order to protect the RSs.

It should be noted that, in Figure 12, the location of zero crossings are not aligned at the LTE DL DM-RS positions, which are shown above the resource grid as dark boxes. Thus, the DM-RS can be strongly interfered.

However, as can be seen from Fig. 12 there are zero-crossings, where no interference occurs (the encircled locations in the grid). It is therefore possible according to one embodiment to shift the LTE DL DM-RS positions to these locations so that they are not disturbed by interference.

This is illustrated in Fig. 13. Figure 13 shows an example of the slightly modified DM-RS positions that are adapted from the original LTE DM-RS design so as to align them to the zero crossings or to the SC center frequencies of the 60 kHz SC spacing. At a periodicity of every fourth resource elements, REs, now DM-RSs are located, which results in a constant RS density over multiple PRBs.

In one embodiment, reference symbols are located at one or more of center frequencies of the largest configurable subcarrier spacing. This approach basically obtains all the benefits of simple receiver processing and well protected reference symbols. The RS density, however, may be too sparse if the largest SC spacing is simply too large.

In one embodiment, reference symbols are located at one or more of center frequencies of the configurable subcarrier spacing larger than the smallest subcarrier spacing. This approach compromises between RS density and RS protection since the RS on the SCs with the chosen SC spacing may be interfered by the SCs with larger SC spacing, but the density can be made higher.

In one embodiment, the locations of reference symbols to be aligned with the SC center frequencies of one chosen SC spacing are only limited inside a selected subset of contiguously allocated physical resource blocks. This makes the RS design more flexible since the RS positions are not restricted in other physical resource blocks.

In one embodiment, the locations of reference symbols to be aligned with the SC center frequencies of one chosen SC spacing are only limited to the physical resource blocks at one or both edges of the contiguously allocated physical resource blocks. This is motivated by the fact that the interference arising from the use of mixed numerologies are mostly relevant around at the border of neighbor PRBs when different numerologies are applied. This also makes the RS design more flexible since the RS positions are not restricted in other physical resource blocks.

It should be noted that Figures 12 and 13 show only one possibility of configurable SC spacings and center frequency selections, in fact there are a lot more such configuration options, which fulfil the conditions explained above. Among these options there may be chosen one, i.e. one SC spacing and one center frequency location, for the actual transmission. The location of the reference signals may then be chosen accordingly at the locations of the then resulting zero crossings.

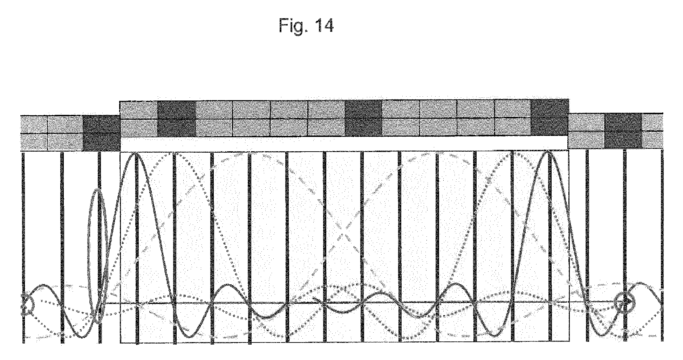

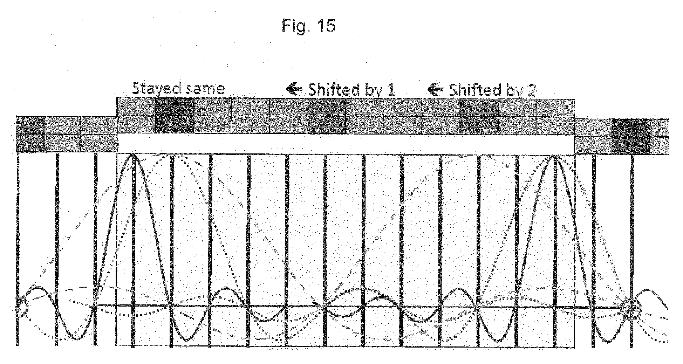

Fig. 14 shows a different possible configuration option for the SC spacings and the center frequency locations than the example of Fig. 12. It can be seen that in Fig. 13 the zero crossings are at different locations than in Fig. 12, therefore also the RS locations should be chosen differently. This is illustrated in Fig. 15, with the new shifted positions of the RS being shown above the grid.

The present invention can basically be applied to support any services, however, it becomes particularly relevant for services which require narrow bandwidth because the impact of interference from neighbor subbands at the edges of the contiguously allocated bandwidth can be rather high as compared to wider bandwidth. Therefore, it can be considered to apply the present invention only to a subset of services so that different (possibly simpler) RS design can be defined for other services.

The present invention has been described by exclusively using the LTE DL DM-RS design. It should be clear to skilled person that the present invention can be applied to any reference signal design. That includes, as examples, cell-specific reference signal, CRS, channel state information reference signal, CSI-RS, UL DM-RS, sounding reference signal, SR, etc.

The skilled person will readily recognize that embodiments of the invention may be implemented by software or hardware or by a combination of both. As far as an apparatus or a module according to embodiments of the invention is concerned, the skilled person will recognize that they can be implemented by a microprocessor, e.g. a digital signal processor, controlled by a suitably programmed computer program.

## Claims

1. A method for transmitting a multicarrier signal over frequency resource, wherein
a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks ,
d) said subcarrier spacing *dₙ* is 2*ⁿ* times the smallest configurable subcarrier spacing *d₀* with non-negative integer *n*, and
e) subcarrier center frequencies of subcarrier spacing *dₙ* and subcarrier center frequencies of subcarrier spacing *d*_{*n*+1} are shifted by integer multiples of *dₙ.*

2. The method of claim 1, wherein
steps a) to e) define all possible subcarrier spacings and the corresponding locations of center frequencies, which can be configured for a certain resource block or a set of contiguous resource blocks, and wherein during an actual act of transmission one of the thus defined possible subcarrier spacings and one of the corresponding center frequency locations is configured or chosen to be used for transmission in said certain resource block or set of contiguous resource blocks.

3. The method of claim 1 or 2, wherein
different SC spacings and center frequency locations can be selected for neighboring resource blocks or neighboring sets of contiguous resource blocks.

4. The method of one of the preceding claims,
said contiguous set of resource blocks, per which said number of subcarriers or said subcarrier spacing is configurable, is a subband of said frequency resource, said subband being assigned to a certain user or a certain service, and wherein
different subbands may have assigned different subcarrier frequency spacings.

5. The method of one of the preceding claims, wherein
said resource block or contiguous set of resource blocks has a width being a positive non-zero integer multiple of the subcarrier spacing configured for said resource block or contiguous set of resource blocks.

6. The method of one of the preceding claims,
- wherein reference symbols are located at one or more of center frequencies of the configurable subcarrier spacing larger than the smallest subcarrier spacing.

7. The method of one of the preceding claims,
- wherein reference symbols are located at one or more of center frequencies of the largest configured subcarrier spacing.

8. The method of one of claims 6 or 7,
- wherein said reference symbols are located inside a configurable subset of contiguously allocated physical resource blocks.

9. The method of claim 8,
wherein said subset of contiguously allocated physical resource blocks are located at one or both edges of said contiguously allocated physical resource blocks.

10. An apparatus for transmitting a multicarrier signal over frequency resource, wherein
a) said frequency resource is divided into a plurality of resource blocks,
b) said resource block comprises of a number of subcarriers that are equally spaced by a subcarrier spacing,
c) said apparatus comprises a module for configuring a number of subcarriers or said subcarrier spacing per said resource block or per a contiguous set of resource blocks, said configuring being performed such that
d) said subcarrier spacing *dₙ* is 2*ⁿ* times the smallest configurable subcarrier spacing *do* with non-negative integer *n*, and
e) subcarrier center frequencies of subcarrier spacing *dₙ* and subcarrier center frequencies of subcarrier spacing *d*_{*n*+1} are shifted by integer multiples of *dₙ.*

11. The apparatus of claim 9, further comprising a module for performing the steps as defined in one of claims 2 to 9.

12. A multicarrier signal to be transmitted over a frequency resource, wherein
a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks,
d) said subcarrier spacing *dₙ* is 2*ⁿ* times the smallest configurable subcarrier spacing do with non-negative integer *n*, and
e) subcarrier center frequencies of subcarrier spacing *dₙ* and subcarrier center frequencies of subcarrier spacing *d*_{*n*+1} are shifted by integer multiples of *dₙ.*

## Amended claims

### Amended claims in accordance with Rule 137(2) EPC.

1. A method for transmitting a multicarrier signal over frequency resource, wherein
a) said frequency resource is divided into a plurality of resource blocks,
b) each of said plurality of resource blocks comprises a number of subcarriers that are equally spaced by a subcarrier spacing,
c) said subcarrier spacing is configurable per resource block or per a contiguous set of resource blocks ,
d) said subcarrier spacing *dₙ* is 2*ⁿ* times the smallest subcarrier spacing do with non-negative integer *n*,
e) subcarrier center frequencies of subcarrier spacing *d*_{*n*+1} are shifted from subcarrier center frequencies of subcarrier spacing *dₙ* by integer multiples of *dₙ, and*
f) wherein reference symbols are located at one or more of center frequencies of the subcarrier spacing larger than the smallest subcarrier spacing.

2. The method of claim 1, wherein
steps a) to e) define all possible subcarrier spacings and the corresponding locations of center frequencies, which can be configured for a certain resource block or a set of contiguous resource blocks, and wherein during an actual act of transmission one of the thus defined possible subcarrier spacings and one of the corresponding center frequency locations is configured or chosen to be used for transmission in said certain resource block or set of contiguous resource blocks.

3. The method of claim 1 or 2, wherein
different SC spacings and center frequency locations can be selected for neighboring resource blocks or neighboring sets of contiguous resource blocks.

4. The method of one of the preceding claims,
said contiguous set of resource blocks, per which said subcarrier spacing is configurable, is a subband of said frequency resource, said subband being assigned to a certain user or a certain service, and wherein different subcarrier frequency spacing are assigned to different subbands.

5. The method of one of the preceding claims, wherein
said resource block or contiguous set of resource blocks has a width being a positive non-zero integer multiple of the subcarrier spacing configured for said resource block or contiguous set of resource blocks.

6. The method of one of the preceding claims,
- wherein reference symbols are located at one or more of center frequencies of the largest configured subcarrier spacing.

7. The method of one of claims 1 or 6,
- wherein said reference symbols are located inside a configurable subset of contiguously allocated physical resource blocks.

8. The method of claim 7,
- wherein said subset of contiguously allocated physical resource blocks are located at one or both edges of said contiguously allocated physical resource blocks.

9. An apparatus for transmitting a multicarrier signal over frequency resource, wherein
a) said frequency resource is divided into a plurality of resource blocks,
b) each of said plurality of resource blocks comprises a number of subcarriers that are equally spaced by a subcarrier spacing,
c) said apparatus comprises a module for configuring said subcarrier spacing per resource block or per a contiguous set of resource blocks, said configuring being performed such that
d) said subcarrier spacing *dₙ* is 2*ⁿ* times the smallest subcarrier spacing do with non-negative integer *n*, and
e) subcarrier center frequencies of subcarrier spacing *d*_{*n*+1} are shifted from subcarrier center frequencies of subcarrier spacing *dₙ* by integer multiples of *dₙ, and*
f) wherein reference symbols are located at one or more of center frequencies of the subcarrier spacing larger than the smallest subcarrier spacing.

10. The apparatus of claim 9, further comprising a module for performing the steps as defined in one of claims 2 to 8.

11. A multicarrier signal to be transmitted over a frequency resource, wherein
a) said frequency resource is divided into a plurality of resource blocks,
b) each of said plurality of resource blocks comprises a number of subcarriers that are equally spaced by a subcarrier spacing,
c) said subcarrier spacing is configurable per resource block or per a contiguous set of resource blocks ,
d) said subcarrier spacing *dₙ* is 2*ⁿ* times the smallest subcarrier spacing do with non-negative integer *n*, and
e) subcarrier center frequencies of subcarrier spacing *d*_{*n*+1} are shifted from subcarrier center frequencies of subcarrier spacing *dₙ* by integer multiples of *dₙ, and*
f) wherein reference symbols are located at one or more of center frequencies of the subcarrier spacing larger than the smallest subcarrier spacing.
